# EUROPEAN PATENT APPLICATION

(11) **EP 4 183 470 A1**
(43) Date of publication of application: **24.05.2023**
(21) Application number: 20945025.3
(22) Date of filing: 16.07.2020
(51) Int. Cl.: B01D 53/04, B01D 53/06, B01J 20/20, B01J 20/34

(54) **ORGANIC SOLVENT RECOVERY SYSTEM**

(71) Applicant: TOYOBO CO., LTD., Osaka-shi Osaka 5300001 (JP)
(72) Inventor: TATEYAMA, Samu, Otsu-shi, Shiga 520-0292 (JP); OKADA, Takemasa, Otsu-shi, Shiga 520-0292 (JP); HAYASHI, Toshiaki, Osaka-shi, Osaka 530-8230 (JP); SUGIURA, Tsutomu, Osaka-shi, Osaka 530-8230 (JP); KOHNO, Daiki, Osaka-shi, Osaka 530-8230 (JP)
(74) Representative: Vossius & Partner Patentanwälte Rechtsanwälte mbB
(86) International application number: PCT/JP2020/027692
(87) International publication number: WO 2022/014013

(57) **Abstract**

An organic solvent recovery system (1) includes an organic solvent recovery device (100) including at least three treatment tanks (101, 102, 103), each containing a first adsorbent, a water vapor supply unit (110), a connecting flow path (L21, L22, L23), an extraction flow path (L31, L32, L33), and a diluent-gas supply flow path (L70), and an organic solvent concentrating device (200) that contains a second adsorbent (201A) and includes an adsorbing unit (202) and a desorbing unit (203), and a return flow path (400) that returns concentrated gas to diluent-gas supply flow path (L70). The second adsorbent (201A) contains activated carbon fiber nonwoven fabric.

## Description

### TECHNICAL FIELD

The present disclosure relates to an organic solvent recovery system.

### BACKGROUND ART

Conventionally, a system for recovering an organic solvent from gas containing the organic solvent is known. For example, Japanese Patent Laying-Open No. 2014-147863 (hereinafter referred to as "PTL 1") discloses gas treatment equipment that includes three treatment tanks, a gas-being-treated supply unit, a connecting flow path, a water vapor supply unit, and a diluent-gas supply flow path.

The gas-being-treated supply unit supplies gas being treated (raw gas), which contains an organic solvent, to each of the treatment tanks. Each of the treatment tanks includes an adsorbent (e.g., activated carbon fibers) that can adsorb an organic solvent contained in gas being treated. The connecting flow path connects two of the three treatment tanks in series.

Specifically, gas being treated in the treatment tank used in a first adsorbing step is introduced through the connecting flow path into the treatment tank used in a second adsorbing step, and the organic solvent is recovered from the gas being treated. The gas treated in the second adsorbing step is extracted as clean air out of the system. The water vapor supply unit supplies water vapor into the treatment tanks, the water vapor being supplied for desorbing an organic solvent, which is adsorbed by the adsorbent, from the adsorbent. The water vapor supply unit supplies water vapor to the other treatment tank unused in the first adsorbing step and the second adsorbing step.

In other words, in gas treatment equipment described in PTL 1, the adsorbing steps are consecutively performed in the two treatment tanks; meanwhile, a desorbing step is performed in the other treatment tank. The treatment tank where the desorbing step has been performed is subsequently used in the second adsorbing step and then is used in the first adsorption step. The diluent-gas supply flow path is a flow path for supplying diluent gas (e.g., outside air or nitrogen gas) into the connecting flow path. The diluent gas is supplied into the treatment tank in order to dry the adsorbent of the treatment tank used in the second adsorbing step after the desorbing step.

Japanese Patent Laying-Open No. 2014-240052 (hereinafter referred to as "PTL 2") discloses an organic solvent recovery system including a first adsorbing/desorbing device having two treatment tanks and a second adsorbing/desorbing device that recovers an organic solvent contained in gas being treated after the gas is discharged from one of the treatment tanks of the first adsorbing/desorbing device.

Each of the treatment tanks includes a first adsorbing/desorbing element (e.g., activated carbon fibers) that can adsorb an organic solvent contained in gas being treated. In the treatment tanks, the adsorbing step and the desorbing step are alternately performed. The second adsorbing/desorbing device includes a second adsorbing/desorbing element that can adsorb an organic solvent contained in gas being treated after the gas is discharged from the treatment tank.

The second adsorbing/desorbing device includes a first treating unit that allows the second adsorbing/desorbing element to adsorb an organic solvent contained in gas being treated, and a second treating unit that desorbs, from the second adsorbing/desorbing element, an organic solvent adsorbed by the second adsorbing/desorbing element. Gas being treated, which is discharged from the second treating unit, is returned to a flow path that supplies gas being treated (raw gas) into the treatment tanks of the first adsorbing/desorbing device.

### CITATION LIST

### PATENT LITERATURE

PTL 1: Japanese Patent Laying-Open No. 2014-147863
PTL 2: Japanese Patent Laying-Open No. 2014-240052

### SUMMARY OF INVENTION

### TECHNICAL PROBLEM

In the gas treatment equipment described in PTL 1, the adsorbing steps are consecutively performed in the two treatment tanks, thereby increasing the removal rate of an organic solvent. In the organic solvent recovery system described in PTL 2, the adsorbing steps are consecutively performed in any one of the treatment tanks of the first adsorbing/desorbing device and the first treating unit of the second adsorbing/desorbing device, thereby increasing the removal rate of an organic solvent. However, in such an organic solvent recovery system, the need for further increasing the removal rate of an organic solvent arises.

In response to the need, for example, the adsorbing step may be performed by the second adsorbent as described in PTL 2 after the adsorbing steps are consecutively performed in the two treatment tanks as described in PTL 1. In this case, gas being treated, which contains an organic solvent desorbed from the second adsorbent, is returned to the flow path that supplies gas being treated (raw gas) into the treatment tanks.

In this case, however, raw gas and gas being treated, which contains an organic solvent desorbed from the second adsorbent, are both supplied into the treatment tank used in the first adsorbing step, and diluent gas is additionally supplied into the treatment tank used in the second adsorbing step, thereby increasing the quantity of gas supplied into the treatment tanks. The treatment tanks need to be designed with large sizes according to the quantity of gas, inevitably increasing the size of the overall equipment.

An object of the present disclosure is to provide an organic solvent recovery system that can suppress upsizing of the overall equipment when the removal rate of an organic solvent is increased.

### SOLUTION TO PROBLEM

According to an aspect of an organic solvent recovery system of the present disclosure, the organic solvent recovery system including: an organic solvent recovery device that includes at least three treatment tanks, each containing a first adsorbent capable of adsorbing and desorbing an organic solvent contained in gas being treated, the treatment tanks alternately adsorbing the organic solvent to the first adsorbent and desorbing the organic solvent from the first adsorbent by using water vapor, a water vapor supply unit that introduces the water vapor into selected one of the treatment tanks, a connecting flow path connecting the other treatment tanks in series in multiple stages, an extraction flow path that discharges the gas being treated from the treatment tank disposed downstream among the treatment tanks connected in series in multiple stages after the gas is introduced from the treatment tank disposed upstream among the treatment tanks connected in series in multiple stages, the gas being discharged as first treated gas from which the organic solvent is adsorbed by the first adsorbent of the treatment tanks connected in series in multiple stages, and a diluent-gas supply flow path that supplies diluent gas to the connecting flow path; an organic solvent concentrating device containing at least one second adsorbent capable of adsorbing and desorbing the organic solvent, the organic solvent concentrating device including an adsorbing unit that adsorbs, by using the at least one second adsorbent, the organic solvent contained in the first treated gas from the extraction flow path and discharges second treated gas, and a desorbing unit that desorbs, from the at least one second adsorbent, the organic solvent adsorbed in the at least one second adsorbent and discharges the organic solvent as concentrated gas; and a return flow path that returns the concentrated gas to the diluent-gas supply flow path, wherein the at least one second adsorbent contains activated carbon fiber nonwoven fabric.

The organic solvent concentrating device has the at least one second adsorbent disposed on a disc-like adsorption rotor that rotates about a cylinder axis.

The organic solvent concentrating device contains the at least one second adsorbent including a plurality of second adsorbents disposed in the circumferential direction around the cylinder axis of a rotor shaped like a hollow cylinder that rotates about the cylinder axis.

The activated carbon fiber nonwoven fabric has a fiber diameter of 11 µm or more and 120 µm or less, a toluene adsorbency of 25 wt% or more and 75 wt% or less, and a total basis weight of 200 g/m² or more and 6000 g/m² or less.

### ADVANTAGEOUS EFFECTS OF INVENTION

The present disclosure can provide an organic solvent recovery system that can suppress upsizing of the overall equipment when the removal rate of an organic solvent is increased.

### BRIEF DESCRIPTION OF DRAWINGS

Fig. 1 schematically illustrates the configuration of an organic solvent recovery system according to Embodiment 1.
Fig. 2 schematically illustrates a gas flow in a state in which a first adsorbing step is performed in a first treatment tank, a second adsorbing step is performed in a second treatment tank, and a desorbing step is performed in a third treatment tank.
Fig. 3 schematically illustrates the configuration of an organic solvent recovery system according to Embodiment 2.
Fig. 4 is a longitudinal section illustrating an adsorbent body of Embodiment 2.
Fig. 5 is a cross-sectional view of the adsorbent body taken along line V-V of Fig. 4.
Fig. 6 is an enlarged cross-sectional view of the principal part of an adsorption rotor illustrated in Fig. 5.

### DESCRIPTION OF EMBODIMENTS

An organic solvent recovery system according to embodiments based on the present disclosure will be described below with reference to the accompanying drawings. The scope of the present disclosure is not always limited by numbers and quantities in the embodiments unless otherwise specified. The same components and equivalent components are indicated by the same reference numerals and a repetition of an overlapping explanation thereof may be omitted. It is assumed that the configurations of the embodiments are optionally used in combination.

### [Embodiment 1]

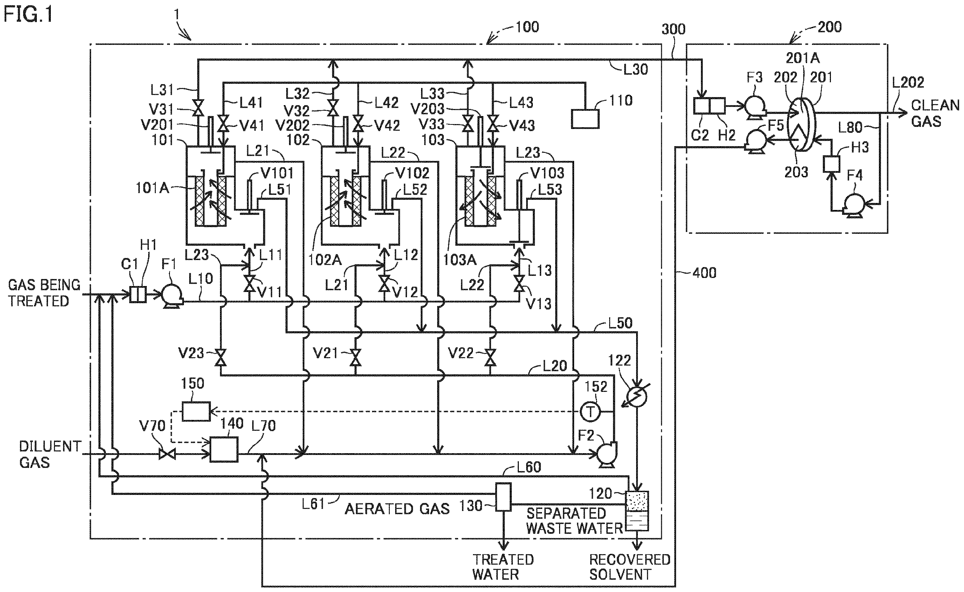

Fig. 1 schematically illustrates the configuration of an organic solvent recovery system according to Embodiment 1. As illustrated in Fig. 1, an organic solvent recovery system 1 includes an organic solvent recovery device 100, an organic solvent concentrating device 200, a feed flow path 300, and a return flow path 400. Organic solvent recovery system 1 removes and recovers an organic solvent from treated gas containing the organic solvent in organic solvent recovery device 100. Thereafter, the system further removes an organic solvent from first treated gas, which is discharged from organic solvent recovery device 100, concentrates the gas in organic solvent concentrating device 200, and returns concentrated gas, which is discharged from the organic solvent concentrating device 200, into organic solvent recovery device 100 through return flow path 400.

An organic solvent indicates methylene chloride, chloroform, carbon tetrachloride, ethylene chloride, trichloroethylene, tetrachloroethylene, O-dichlorobenzene, m-dichlorobenzene, CFC-112, CFC-113, HCFC, HFC, propyl bromide, butyl iodide, methyl acetate, ethyl acetate, propyl acetate, butyl acetate, vinyl acetate, methyl propionate, methyl acrylate, ethyl acrylate, butyl acrylate, methyl methacrylate, diethyl carbonate, ethyl formate, diethyl ether, dipropyl ether, tetrahydrofuran, dibutyl ether, anisole, methanol, ethanol, isopropanol, n-butanol, 2-butanol, isobutanol, t-butanol, allylalcohol, pentanol, heptanol, ethylene glycol, diethylene glycol, phenol, O-cresol, m-cresol, p-cresol, xylenol, acetone, methyl ethyl ketone, methyl isobutyl ketone, cyclohexanone, phorone, acrylonitrile, n-hexane, isohexane, cyclohexane, methylcyclohexane, n-heptane, n-octane, n-nonane, isononane, decane, dodecane, undecane, tetradecane, decalin, benzene, toluene, m-xylene, p-xylene, o-xylene, ethyl benzene, 1,3,5-trimethylbenzene, N-methylpyrrolidone, dimethylformamide, dimethylacetamide, and dimethyl sulfoxide or the like.

Organic solvent recovery device 100 is equipment for removing and recovering an organic solvent from gas being treated. Gas being treated is supplied to organic solvent recovery device 100 from a treated gas source (not illustrated) provided outside the organic solvent recovery device 100. Organic solvent recovery device 100 includes three treatment tanks 101, 102, and 103, a gas-being-treated supply flow path L10, connecting flow paths L21, L22, and L23, extraction flow paths L31, L32, and L33, water-vapor supply flow paths L41, L42, and L43, organic-solvent recovery flow paths L51, L52, and L53, a separator 120, a resupply flow path L60, a diluent-gas supply flow path L70, a heater 140, an on-off valve V70, and a control unit 150.

Treatment tanks 101, 102, and 103 include first adsorbents 101A, 102A, and 103A that can adsorb an organic solvent and desorb an organic solvent. First adsorbents 101A, 102A, and 103A may contain particulate activated carbon, honeycomb particulate carbon, zeolite, or activated carbon fibers. Adsorbents of active carbon fibers are preferably used. Treatment tanks 101, 102, and 103 include open/close dampers V101, V102, and V103 that switch supply/non-supply of gas being treated to a treated-gas supply port and open/close dampers V201, V202, and V203 that switch discharge/non-discharge of a treated-gas outlet port after the gas passes through first adsorbents 101A, 102A, and 103A.

In treatment tanks 101, 102, and 103, the adsorption of an organic solvent by first adsorbents 101A, 102A, and 103A and the desorption of an organic solvent from first adsorbents 101A, 102A, and 103A are alternately performed. The details will be described below.

In one of three treatment tanks 101, 102, and 103, a first adsorbing step is performed to adsorb, by using the first adsorbent, an organic solvent from gas being treated that is supplied from a gas-being-treated source. At the same time, in another one of three treatment tanks 101, 102, and 103, a second adsorbing step is performed to adsorb, by using the first adsorbent, an organic solvent from gas being treated (first adsorbing step gas) that has been treated in the treatment tank used in the first adsorbing step and discharge the first treated gas. During that time, in the other treatment tank, a desorbing step is performed to desorb an organic solvent from the first adsorbent.

In treatment tanks 101, 102, and 103, the desorbing step, the second adsorbing step, the first adsorbing step, and the desorbing step are repeated in this order. Fig. 1 illustrates a state in which the first adsorbing step is performed in first treatment tank 101, the second adsorbing step is performed in second treatment tank 102, and the desorbing step is performed in third treatment tank 103.

Gas-being-treated supply flow path L10 is a flow path for supplying gas being treated into treatment tanks 101, 102, and 103. The upstream end of gas-being-treated supply flow path L10 is connected to the gas-being-treated source. Gas-being-treated supply flow path L10 is provided with a blower F1. Provided upstream of blower F1 on a part of gas-being-treated supply flow path L10 are a cooler C1 and a heater H1 for adjusting the temperature and humidity of gas being treated, which flows into treatment tanks 101, 102, and 103, in a desired range. These devices may be optionally installed according the pressure, temperature, and humidity of gas being treated.

Gas-being-treated supply flow path L10 has branch flow paths L11, L12, and L13 that supply gas being treated into treatment tanks 101, 102, and 103. Branch flow path L11 is provided with an on-off valve V11. Branch flow path L12 is provided with an on-off valve V12. Branch flow path L13 is provided with an on-off valve V13.

Connecting flow paths L21, L22, and L23 each connect one of the treatment tanks to another such that after an organic solvent is adsorbed in the first adsorbent of one (the treatment tank used in the first adsorbing step) of three treatment tanks 101, 102, and 103, gas being treated is introduced to the gas-being-treated supply port of another treatment tank (the treatment tank used in the second adsorbing step) different from the one of three treatment tanks 101, 102, and 103.

Specifically, first connecting flow path L21 connects the treated-gas outlet port of first treatment tank 101 and the gas-being-treated supply port of second treatment tank 102. Second connecting flow path L22 connects the treated-gas outlet port of second treatment tank 102 and the gas-being-treated supply port of third treatment tank 103. Third connecting flow path L23 connects the treated-gas outlet port of third treatment tank 103 and the gas-being-treated supply port of first treatment tank 101.

Connecting flow paths L21, L22, and L23 have a junction flow path L20 where the flow paths L21 to L23 join one another. Junction flow path L20 is provided with a blower F2. On a part further branching from junction flow path L20, first connecting flow path L21 has an on-off valve V21. On a part further branching from junction flow path L20, second connecting flow path L22 has an on-off valve V22. On a part further branching from junction flow path L20, third connecting flow path L23 has an on-off valve V23.

Extraction flow paths L31, L32, and L33 are flow paths for extracting first treated gas that is gas being treated after adsorption in treatment tanks 101, 102, and 103. Extraction flow paths L31, L32, and L33 are connected to the treated-gas outlet ports in treatment tanks 101, 102, and 103. First extraction flow path L31 is provided with an on-off valve V31. Second extraction flow path L32 is provided with an on-off valve V32. Third extraction flow path L33 is provided with an on-off valve V33. Extraction flow paths L31, L32, and L33 have a junction flow path L30 where the flow paths L31 to L33 join one another.

Water-vapor supply flow paths L41, L42, and L43 are flow paths for supplying water vapor into treatment tanks 101, 102, and 103, the water vapor being supplied for desorbing an organic solvent, which is adsorbed in the first adsorbents 101A, 102A, and 103A, from first adsorbents 101A, 102A, and 103A. Water vapor is supplied from a water vapor supply unit 110. Water vapor supply unit 110 may be provided in organic solvent recovery device 100 or may be provided outside organic solvent recovery device 100.

First water-vapor supply flow path L41 connects water vapor supply unit 110 and first treatment tank 101. First water-vapor supply flow path L41 is provided with an on-off valve V41. Second water-vapor supply flow path L42 connects water vapor supply unit 110 and second treatment tank 102. Second water-vapor supply flow path L42 is provided with an on-off valve V42. Third water-vapor supply flow path L43 connects water vapor supply unit 110 and third treatment tank 103. Third water-vapor supply flow path L43 is provided with an on-off valve V43.

Organic-solvent recovery flow paths L51, L52, and L53 are flow paths for recovering water vapor (desorbing gas) containing an organic solvent desorbed from first adsorbents 101A, 102A, and 103A. Organic-solvent recovery flow paths L51, L52, and L53 are connected to treatment tanks 101, 102, and 103. Organic-solvent recovery flow paths L51, L52, and L53 have a junction flow path L50 where the flow paths L51, L52, and L53 join each other. Junction flow path L50 is provided with a condenser 122. Condenser 122 condenses desorbing gas by cooling the desorbing gas passing through the junction flow path L50 and drains condensate (a mixed solution of water generated by condensing desorbing gas and an organic solvent in the liquid phase).

Separator 120 is provided on the downstream end of junction flow path L50. Condensate flows into separator 120. The condensate in separator 120 is then separated into the liquid phase of separated waste water (condensate of water vapor that may contain a certain amount of organic solvent) and the liquid phase of a recovered solvent, and then the recovered solvent is extracted out of organic solvent recovery device 100. The upper portion of separator 120 has a space (vent gas) containing an organic solvent in the gas phase.

Resupply flow path L60 is a flow path connecting separator 120 and gas-being-treated supply flow path L10. The upstream end of resupply flow path L60 is connected to the upper portion of separator 120 (a portion containing an organic solvent in the gas phase in the separator 120). The downstream end of resupply flow path L60 is connected to a portion upstream of cooler C1 on gas-being-treated supply flow path L10. Thus, an organic solvent in the gas phase in separator 120 is preferably supplied again into treatment tanks 101, 102, and 103 through resupply flow path L60 and gas-being-treated supply flow path L10.

Waste water treatment equipment 130 is equipment for removing an organic solvent contained in separated waste water. An organic solvent is removed from separated waste water supplied from the liquid phase of separated waste water of separator 120, and treated water is drained out of organic solvent recovery device 100. Specifically, waste water treatment equipment 130 may be aeration equipment that aerates separated waste water so as to volatilize an organic solvent contained in the separated waste water, and separates the waste water into treated water and aerated gas containing the organic solvent. The aerated gas is connected to a portion upstream of cooler C1 on gas-being-treated supply flow path L10 via an aerated-gas supply flow path L61. The aerated-gas supply flow path may be provided with dehumidifying means, which is not illustrated, in order to remove moisture in aerated gas.

Diluent-gas supply flow path L70 is a flow path for supplying diluent gas for accelerating the drying of first adsorbents 101A, 102A, and 103A after a desorbing step, into connecting flow paths L21, L22, and L23. The diluent gas includes gas containing at least one of outside air, air for instrumentation, nitrogen gas, and argon gas. The diluent gas is supplied from the outside of organic solvent recovery device 100.

Heater 140 is provided on diluent-gas supply flow path L70. Heater 140 heats diluent gas such that the temperature of the diluent gas is higher than the temperature (about 40°C) of gas being treated, which passes through connecting flow paths L21, L22, and L23.

On-off valve V70 is provided on diluent-gas supply flow path L70. On-off valve V70 can adjust the degree of opening.

Organic solvent concentrating device 200 will be described below. Organic solvent concentrating device 200 is equipment for further removing an organic solvent from the first treated gas discharged from organic solvent recovery device 100. Organic solvent concentrating device 200 includes an adsorbent body 201.

Adsorbent body 201 has a second adsorbent 201A that can adsorb an organic solvent contained in the first treated gas discharged through the junction flow path L30. Adsorbent body 201 includes an adsorbing unit 202 that adsorbs, by using second adsorbent 201A, an organic solvent contained in the first treated gas, and a desorbing unit 203 that desorbs, from second adsorbent 201A, an organic solvent adsorbed in second adsorbent 201A. The first treated gas is passed through adsorbing unit 202, so that second treated gas can be discharged as clean gas from which an organic solvent has been further removed. After the completion of adsorption, heating gas with a smaller quantity than the first treated gas is passed through desorbing unit 203 to desorb an organic solvent adsorbed in second adsorbent 201A, so that concentrated gas containing a concentrated organic solvent is discharged.

In the present embodiment, adsorbent body 201 is a circular (disc-shaped) rotor. Adsorbent body 201 rotates between adsorbing unit 202 and desorbing unit 203 so as to switch adsorption and desorption. The structure of adsorbent body 201 is identical to the contents described in PTL 2.

Feed flow path 300 is a flow path for feeding gas being treated from organic solvent recovery device 100 to organic solvent concentrating device 200. The upstream end of feed flow path 300 is connected to junction flow path L30. The downstream end of feed flow path 300 is connected to adsorbing unit 202 of adsorbent body 201. In other words, feed flow path 300 is a flow path for feeding the first treated gas to adsorbing unit 202.

Feed flow path 300 is provided with a blower F3. Provided upstream of blower F3 on a part of feed flow path 300 are a cooler C2 and a heater H2 for adjusting the humidity of the first treated gas, which flows into adsorbing unit 202, in a desired range.

Return flow path 400 is a flow path for returning concentrated gas from organic solvent concentrating device 200 to organic solvent recovery device 100. Return flow path 400 connects desorbing unit 203 and diluent-gas supply flow path L70. Specifically, the downstream end of return flow path 400 is connected to a portion downstream of heater 140 on diluent-gas supply flow path L70.

Return flow path 400 is provided with a blower F5. The air quantity of blower F5 is set at, for example, about one tenth of the air quantity of blower F3.

In present embodiment, organic solvent concentrating device 200 delivers second treated gas (clean gas), which is discharged from adsorbing unit 202, to the outside from a clean-gas discharge flow path L202. Organic solvent concentrating device 200 further includes a connecting flow path L80 and a heater H3.

Connecting flow path L80 connects clean-gas discharge flow path L202 and desorbing unit 203. The second treated gas is partially used for desorption in desorbing unit 203. Connecting flow path L80 is provided with a blower F4. In this configuration, outside air may be used for desorption in desorbing unit 203.

Heater H3 is provided on connecting flow path L80. More specifically, heater H3 is provided at a portion downstream of blower F4 on connecting flow path L80. Heater H3 heats the second treated gas such that the temperature of concentrated gas passing through return flow path 400 is higher than the temperature of gas being treated, which passes through connecting flow paths L21, L22, and L23. For example, heater H3 heats the second treated gas such that the temperature of the second treated gas passing through connecting flow path L80 is about 130°C to 180°C. In this case, the temperature of the second treated gas discharged from desorbing unit 203 is about 60°C to 80°C.

For second adsorbent 201A, an activated carbon fiber nonwoven fabric is used. The first treated gas passes through the activated carbon fiber nonwoven fabric, thereby improving the efficiency of impingement with a substance being treated and increasing the adsorption efficiency. Also when the second treated gas heated to desorb an adsorbed substance being treated is supplied, the contact efficiency of the activated carbon fiber nonwoven fabric and the heated second treated gas is improved and thermal energy is efficiently transmitted to the activated carbon fiber nonwoven fabric, thereby reducing the quantity of the heated second treated gas. In other words, the activated carbon fiber nonwoven fabric used for the second adsorbent 201A can obtain high removing capability and high concentration.

Activated carbon fibers constituting the activated carbon fiber nonwoven fabric are preferably 11 µm or more and 120 µm or less in fiber diameter. If the fiber diameter is less than 11 µm, a pressure loss increases, leading to an insufficient gas flow. If the fiber diameter exceeds 120 µm, the efficiency of impingement with a substance being treated decreases to lower the adsorption efficiency, deteriorating the adsorbing capability. As the efficiency of contact with the heated second treated gas decreases, thermal energy is less likely to be transmitted to the activated carbon fiber nonwoven fabric, so that the quantity of the heated second treated gas increases. Furthermore, the activated carbon fiber nonwoven fabric becomes less flexible and hard to work. In consideration of a balance among a pressure loss, the adsorbing capability, a heated air quantity, and workability, the fiber diameter is preferably 15 µm or more and 120 µm or less.

The activated carbon fiber nonwoven fabric preferably has a toluene adsorbency of 25 wt% or more and 75 wt% or less. If the toluene adsorbency is 25 wt% or less, the adsorbing capability deteriorates. Activated carbon fibers with a high toluene adsorbency have a large total pore volume, so that the fibers have a low volume density. Thus, if the toluene adsorbency exceeds 75 wt%, the tensile strength of a single yarn decreases, the tensile strength and compression modulus of the activated carbon fiber nonwoven fabric decrease, and the shape becomes less stable. In consideration of a balance between the adsorbing capability and the shape stability, the toluene adsorbency is more preferably 30 wt% or more and 70 wt% or less.

The activated carbon fiber nonwoven fabric preferably has a total basis weight of 200 g/m² or more and 6000 g/m² or less. If the total basis weight is less than 200 g/m², the efficiency of impingement with a substance being treated decreases, deteriorating the adsorbing capability. If the total basis weight exceeds 6000 g/m², a pressure loss increases, leading to an insufficient gas flow. In consideration of a balance between the adsorbing capability and a pressure loss, the total basis weight is more preferably 1200 g/m² or more and 4000 g/m² or less.

The activated carbon fiber nonwoven fabric preferably has a volume density of 50 kg/m³ or more and 200 kg/m³ or less. If the volume density is less than 50 kg/m³, the nonwoven fabric increases in compressibility and becomes hard to work. If the volume density exceeds 200 kg/m³, the pressure loss of the nonwoven fabric increases, leading to an insufficient gas flow. In consideration of a balance between the workability and a pressure loss, the volume density is more preferably 60 kg/m³ or more and 150 kg/m³ or less.

The compressibility of the activated carbon fiber nonwoven fabric is preferably 30% or less and is more preferably 25% or less. If the compressibility exceeds 30%, the fabric becomes hard to work. The lower limit of the compressibility is typically 5% or more.

The compression modulus of the activated carbon fiber nonwoven fabric is preferably 80% or more and is more preferably 85% or more. When the compression modulus falls below 80%, an airflow is repeatedly supplied and stopped or countercurrent airflows are alternately repeated, so that the activated carbon fiber nonwoven fabric is displaced with time. This may cause a short pass of gas and immediately reduce the adsorption efficiency of a substance being treated. The upper limit of the compression modulus is typically 99% or less.

A method for manufacturing the precursor nonwoven fabric of the activated carbon fiber nonwoven fabric is not particularly limited. A known method can be optionally used instead. A method for manufacturing nonwoven fabric may be, for example, spun-bonding, meltblowing, spunlacing, needlepunching, thermal bonding, or chemical bonding. Needlepunching is preferable among the methods.

The activated carbon fiber nonwoven fabric can be manufactured by activating a precursor nonwoven fabric after carbonizing the fabric according to a known method. Specifically, the method of activation may be, for example, gas activation or chemical activation. In view of improvement in fiber strength and purity, gas activation is preferable.

Alternatively, a sheet of activated carbon fibers can be manufactured as activated carbon fiber nonwoven fabric by using a binder according to wet papermaking.

The precursor fibers of activated carbon fibers are, for example, phenolic plastic, cellulose fibers, polyphenylene ether fibers, polyacrylonitrile, pitch, lignin, and bamboos. In view of improvement in fiber strength, compression modulus, and purity, phenolic plastic, cellulose fibers, and polyphenylene ether fibers are preferable.

Activated carbon fiber nonwoven fabric features a higher toluene adsorbency and a higher adsorbing/desorbing speed than honeycomb activated carbon and zeolite or the like. This feature allows organic solvent concentrating device 200 using activated carbon fiber nonwoven fabric to increase a concentration rate (a value determined by dividing a quantity of treated gas by a quantity of concentrated gas) and reduce a quantity of concentrated gas. This reduces the quantity of concentrated gas that returns to organic solvent recovery device 100. Thus, the quantity of gas being treated in organic solvent recovery device 100 decreases. These effects can reduce the size of overall organic solvent recovery system 1 and suppress operation energy.

Activated carbon fiber nonwoven fabric features a large outer surface area that is quickly dried after being moistened. The first treated gas discharged from organic solvent recovery device 100 contains moisture derived from water vapor. However, organic solvent concentrating device 200 using quick-drying activated carbon fiber nonwoven fabric can suppress the influence of moisture on the performance.

Control unit 150 controls the temperature of gas being treated. Specifically, control unit 150 controls the temperatures of a heater 140 such that the temperature of gas being treated that flows into the treatment tank (the treatment tank disposed on the downstream side in a flow of gas being treated from among three treatment tanks 101, 102, and 103 connected via connecting flow paths L21, L22, and L23) used in the second adsorbing step is kept in a predetermined range (e.g., 40°C to 80°C).

The temperature of mixed gas that flows into the treatment tank used in the second adsorbing step is detected by a temperature sensor 152. The temperature sensor 152 is provided on junction flow path L20.

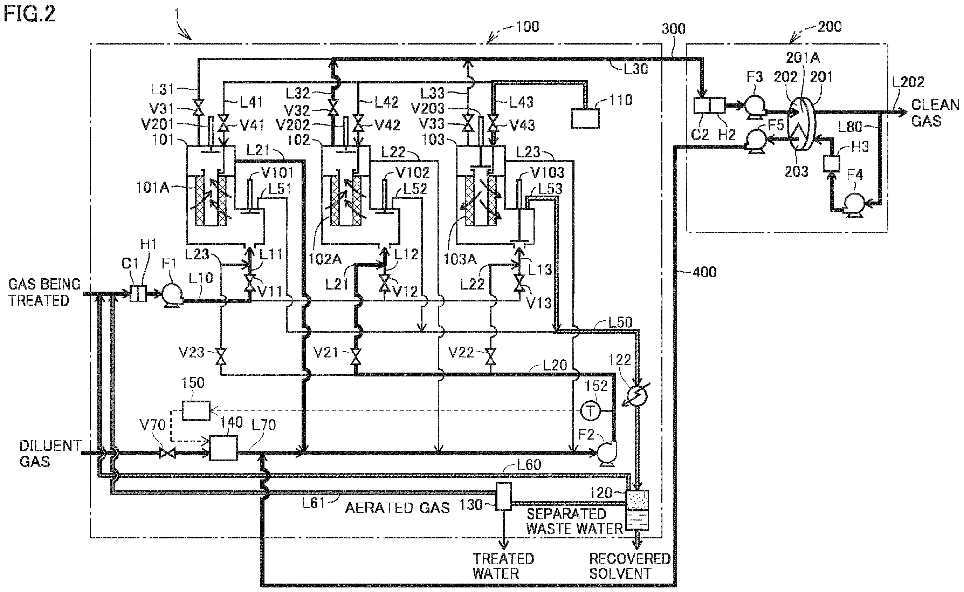

The operations of organic solvent recovery system 1 will be described below. Referring to Fig. 2, an example of the operations of organic solvent recovery system 1 will be discussed. Fig. 2 schematically illustrates a flow of gas in a state in which the first adsorbing step is performed in first treatment tank 101, the second adsorbing step is performed in second treatment tank 102, and the desorbing step is performed in third treatment tank 103. In Fig. 2, thick solid lines indicate a flow of gas to be adsorbed in first treatment tank 101, second treatment tank 102, and adsorbent body 201, and diagonally hatched lines indicate a flow of gas containing water vapor supplied into third treatment tank 103 and an organic solvent desorbed from first adsorbent 103A.

In the treatment tanks, the first adsorbing step -> the desorbing step -> the second adsorbing step → the first adsorbing step → are repeated in this order.

In the state of Fig. 2, on-off valves V 11, V21, V32, and V43 and open/close dampers V101, V102, V201 and V202 are opened, and on-off valves V12, V13, V22, V23, V31, V33, V41, and V42 and open/close dampers V103 and V203 are closed.

In the state of Fig. 2, gas being treated is supplied from the gas-being-treated source to first treatment tank 101 through gas-being-treated supply flow path L10 and branch flow path L11, and an organic solvent contained in the gas being treated is adsorbed to first adsorbent 101A of first treatment tank 101 (first adsorbing step). Thereafter, the gas being treated is supplied into second treatment tank 102 along with second treated gas that has been passed through first connecting flow path L21 and returned through return flow path 400, further adsorbing an organic solvent contained in gas supplied into first adsorbent 102A of second treatment tank 102 (second adsorbing step).

In the second adsorbing step (particularly the initial stage of the second adsorbing step) in second treatment tank 102, first adsorbent 102A is dried by supplied gas. Since the second adsorbing step is performed after the desorbing step using water vapor, first adsorbent 102A containing moisture needs to be dried to improve the adsorbing capability. The drying will be described again later. Even if drying performed in the second adsorbing step is separated as a drying step in a system, that is, even if the treatment tanks perform the first adsorbing step -> the desorbing step ->-> the drying step -> the second adsorbing step -> the first adsorbing step -> in this order in a system, such a system is compatible to the present system.

The first treated gas discharged from second treatment tank 102 is fed to adsorbent body 201 of organic solvent concentrating device 200 through second extraction flow path L32 and feed flow path 300, and an organic solvent contained in the first treated gas is adsorbed in adsorbing unit 202. Subsequently, the second treated gas discharged from adsorbing unit 202 is extracted out of organic solvent recovery system 1 and is partially fed to desorbing unit 203 through connecting flow path L80. At this point, the second treated gas fed to desorbing unit 203 is heated by heater H3.

Concentrated gas discharged from desorbing unit 203 is returned to diluent-gas supply flow path L70 through return flow path 400. The concentrated gas that has been returned through return flow path 400 is supplied into second treatment tank 102 through first connecting flow path L21 along with gas being treated that has been discharged from first treatment tank 101 and diluent gas supplied from the outside of the device.

Water vapor is supplied to third treatment tank 103 from water vapor supply unit 110 through third water-vapor supply flow path L43, so that an organic solvent is desorbed from first adsorbent 103A (desorbing step). Water vapor containing the organic solvent desorbed from first adsorbent 103A is condensed by condenser 122 through organic-solvent recovery flow path L53 and then flows into separator 120. The recovered solvent having undergone phase separation in separator 120 is extracted out of organic solvent recovery device 100, and vent gas in separator 120 is returned to gas-being-treated supply flow path L10 through resupply flow path L60. Separated waste water is treated in waste water treatment equipment 130, the treated water is extracted out of organic solvent recovery device 100, and aerated gas is returned to gas-being-treated supply flow path L10 through aerated-gas supply flow path L61.

As described above, in organic solvent recovery system 1 of the present embodiment, gas being treated that is desorbed from second adsorbent 201A is returned into diluent-gas supply flow path L70 through return flow path 400, thereby reducing the quantity of diluent gas supplied into connecting flow paths L21, L22, and L23, accordingly. Thus, an organic solvent contained in gas being treated can be continuously recovered in the two treatment tanks and adsorbing unit 202 of adsorbent body 201 while avoiding a substantial increase in air quantity supplied into downstream one of the two treatment tanks connected via connecting flow paths L21, L22, and L23. Hence, organic solvent recovery system 1 can improve the recovery rate of an organic solvent while avoiding upsizing of equipment.

In organic solvent recovery system 1 of the present embodiment, an activated carbon fiber nonwoven fabric is used for second adsorbent 201A, and thus an organic solvent contained in treated gas can be recovered with high performance. Hence, organic solvent recovery system 1 can improve the recovery rate of an organic solvent while avoiding upsizing of equipment.

### [Embodiment 2]

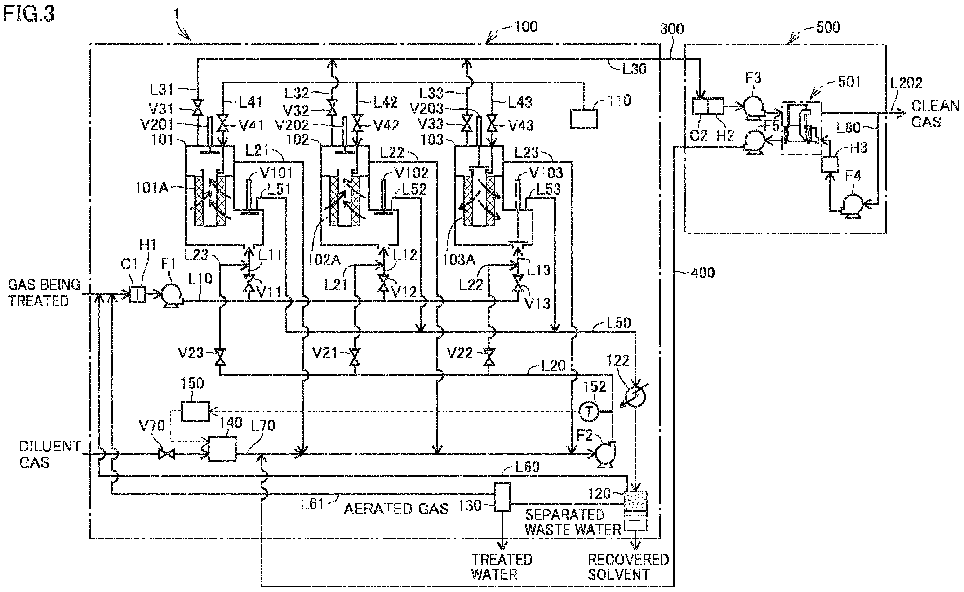

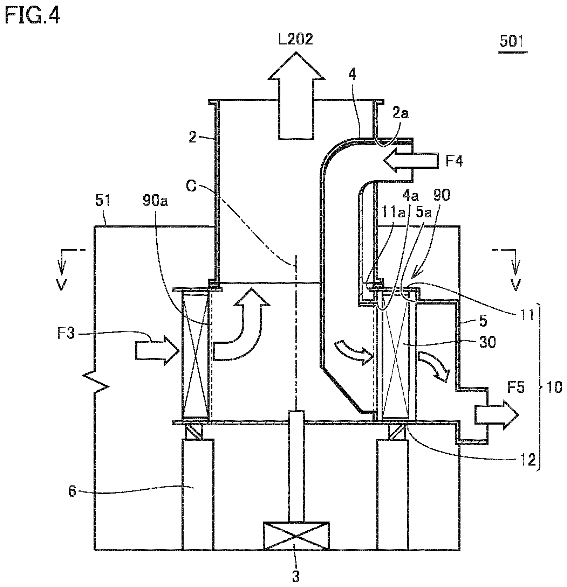

Fig. 3 schematically illustrates the configuration of an organic solvent recovery system according to Embodiment 2. As illustrated in Fig. 3, in Embodiment 2, organic solvent concentrating device 200 of Fig. 1 is replaced with an organic solvent concentrating device 500. Organic solvent concentrating device 500 includes an adsorbent body 501. Configurations other than adsorbent body 501 are identical to the configurations of organic solvent concentrating device 200 of Fig. 1. Referring to Figs. 4 to 6, the detail of adsorbent body 501 will be described below.

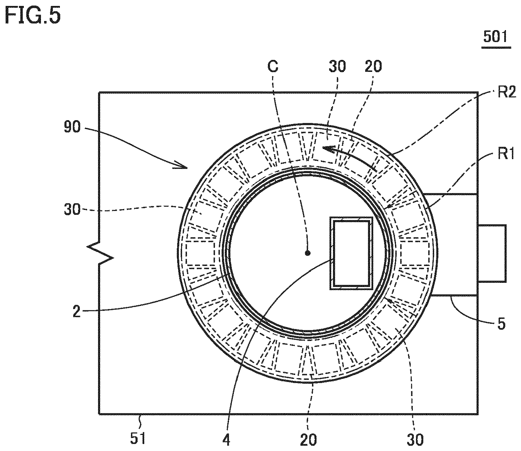

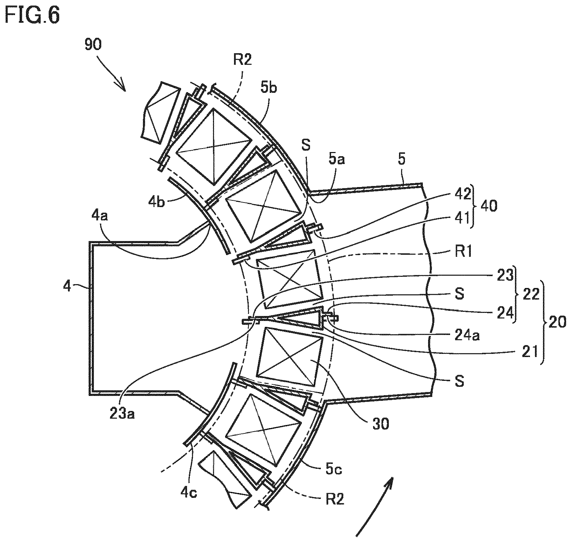

Fig. 4 is a longitudinal section illustrating the adsorbent body of Embodiment 2. Fig. 5 is a cross-sectional view of the adsorbent body taken along line V-V of Fig. 4. Fig. 6 is an enlarged cross-sectional view of the principal part of an adsorption rotor illustrated in Fig. 5.

As illustrated in Figs. 4 to 6, adsorbent body 501 includes an adsorption rotor 90. Adsorption rotor 90 is installed in a treatment chamber 51. Adsorption rotor 90 is provided so as to pass fluid in a radial direction. Adsorption rotor 90 is rotatable about a cylinder axis C in response to the torque of a motor 3. Adsorption rotor 90 is rotatably supported on a plurality of support members 6 such as columns such that cylinder axis C is directed in the vertical direction. Cylinder axis C may be directed in the horizontal direction. Curved arrows in Figs. 5 and 6 indicate the rotation direction of adsorption rotor 90.

Adsorption rotor 90 includes a pair of hollow discs 10, a plurality of partitions 20, and a plurality of adsorption units 30.

The pair of hollow discs 10 includes a first hollow disc 11 and a second hollow disc 12. The first hollow disc 11 and the second hollow disc 12 are shape like annular plates centered on cylinder axis C. An opening 11a is formed in the central portion of first hollow disc 11. The first hollow disc 11 and the second hollow disc 12 are disposed in parallel at a certain distance from each other such that partitions 20 and adsorption units 30 can be placed between the discs.

Between the pair of hollow discs 10, partitions 20 and adsorption units 30 are alternately placed around cylinder axis C in the circumferential direction, so that adsorption rotor 90 is cylindrically formed. Adsorption rotor 90 is entirely shaped like a hollow cylinder and has a cylinder hole 90a (central space portion). Cylinder hole 90a communicates with opening 11a of first hollow disc 11.

Partitions 20 divide a space between the pair of hollow discs 10 into a plurality of space portions S (see Fig. 6) that are independent from one another in the circumferential direction around cylinder axis C. Partitions 20 are members that have no air flow paths and are not permeable to gas. Partitions 20 are attached with air tightness and/or liquid tightness between the pair of hollow discs 10.

Each of partitions 20 includes a body portion 21 and a seal portion 22. Body portion 21 is made of stainless or iron and constitutes the frame of partition 20. Body portion 21 is shaped like a triangular pole. Body portion 21 has a top edge portion placed near the inner periphery of adsorption rotor 90 and a bottom portion placed near the outer periphery of adsorption rotor 90. Partitions 20 are disposed such that the triangular shapes of body portions 21 in plan view have the centers of gravity at regular intervals around cylinder axis C in the circumferential direction.

Seal portion 22 is provided around body portion 21. Seal portion 22 may be integrated with body portion 21 or may be configured as a separate member of body portion 21. If seal portion 22 is configured as a separate member of body portion 21, seal portion 22 may be joined to body portion 21 by bonding or the like, or may be configured to be attachable to and detachable from body portion 21.

Seal portion 22 of the present embodiment includes an inner seal portion 23 and an outer seal portion 24. Inner seal portion 23 is disposed inside body portion 21 (near cylinder axis C) in a radial direction of adsorption rotor 90. Outer seal portion 24 is disposed outside body portion 21 (remote from cylinder axis C) in a radial direction of adsorption rotor 90. Inner seal portion 23 is provided to protrude inward in a radial direction of adsorption rotor 90 from the top edge portion of body portion 21. Outer seal portion 24 is provided to protrude outward in a radial direction of adsorption rotor 90 from the bottom of body portion 21.

Inner seal portion 23 and outer seal portion 24 of the present embodiment are each shaped like a rib that extends in the axial direction of adsorption rotor 90 (the extending direction of cylinder axis C) and extends in a radial direction of adsorption rotor 90. Inner seal portion 23 has a seal surface 23a. Outer seal portion 24 has a seal surface 24a. Seal surfaces 23a and 24a intersect the rotation direction of adsorption rotor 90.

On inner seal portion 23 and outer seal portion 24, a seal member 40 is provided. Seal member 40 is made of, for example, an elastic rubber material and has air tightness and/or liquid tightness. Seal member 40 may have the function of separating an adsorption area where adsorption is performed to adsorb gas being treated to adsorption units 30 and a desorption area where desorption is performed to desorb gas being treated from adsorption units 30 and/or the function of preventing leakage of gas being treated from adsorbent body 501 and treatment chamber 51.

Seal member 40 includes an inner seal member 41 placed near the inner periphery of adsorption rotor 90 and an outer seal member 42 placed near the outer periphery of adsorption rotor 90. Inner seal member 41 is provided on seal surface 23a of inner seal portion 23. Inner seal member 41 protrudes inward in a radial direction of adsorption rotor 90 from partition 20.

Outer seal member 42 is provided on seal surface 24a of outer seal portion 24. Outer seal member 42 protrudes outward in a radial direction of adsorption rotor 90 from partition 20. Inner seal member 41 and outer seal member 42 between the pair of hollow discs 10 extend from one of the hollow discs (first hollow disc 11) to the other hollow disc (second hollow disc 12).

Adsorption unit 30 is a member containing an adsorbent element. Gas such as gas being treated can cross and pass through the adsorbent element. In adsorption units 30 of the embodiment, gas can pass from the outer surface of adsorption rotor 90 to cylinder hole 90a. Each of adsorption units 30 is stored in any one of independent space portions S. Adsorption units 30 are spaced in the circumferential direction of adsorption rotor 90. Partition 20 is disposed between two adsorption units 30 adjacent to each other in the circumferential direction of adsorption rotor 90.

Each of adsorption units 30 has an outside shape like a rectangular solid. Adsorption unit 30 has four first sides extending in the axial direction of adsorption rotor 90, four second sides extending in a radial direction of adsorption rotor 90, and four third sides extending perpendicularly to the first sides and the second sides. In adsorption unit 30 of the embodiment, the first side is quite longer than the second side and the third side. Adsorption unit 30 is shaped like a rectangular solid with the first sides formed as long sides. Adsorption unit 30 orthogonal to cylinder axis C is square or rectangular in cross section.

In adsorption unit 30 according to the present embodiment, at least one layer of activated carbon fiber nonwoven fabric is stacked as an adsorbent. The physical property value of the activated carbon fiber nonwoven fabric serving as an adsorbent is equal to the physical property value of the activated carbon fiber nonwoven fabric of second adsorbent 201A described in Embodiment 1.

In adsorbent body 501, a part of adsorption unit 30 constitutes an adsorbing unit that adsorbs an organic solvent contained in first treated gas supplied inward from the outside of adsorption unit 30, and the other part of adsorption unit 30 constitutes a desorbing unit that desorbs an organic solvent adsorbed in adsorption unit 30, the organic solvent being desorbed from adsorption unit 30 by supplying heated air from the inside of adsorption unit 30 to the outside.

Referring to Figs. 4 to 6 again, adsorbent body 501 further includes a first flow-path forming member 2, an inner flow-path forming member 4, and an outer flow-path forming member 5.

One end of first flow-path forming member 2 is configured to keep the airtightness of the inside of first flow-path forming member 2 and the cylinder hole 90a of adsorption rotor 90 and allow adsorption rotor 90 to rotate about cylinder axis C. An annular seal member may be held by one end of first flow-path forming member 2 and first hollow disc 11 at a portion placed on the circumferential edge of opening 11a. The other end of first flow-path forming member 2 is drawn out of treatment chamber 51.

Inner flow-path forming member 4 is disposed in cylinder hole 90a on the inner side of adsorption rotor 90. Outer flow-path forming member 5 is disposed on the outer side of adsorption rotor 90. Inner flow-path forming member 4 and outer flow-path forming member 5 are opposed to each other on the inner side and the outer side of adsorption rotor 90 such that a part of adsorption rotor 90 in the circumferential direction is held between the forming members.

Inner flow-path forming member 4 is provided so as to extend along cylinder hole 90a and extend out of adsorption rotor 90 from opening 11a. Inner flow-path forming member 4 includes a part extending along cylinder axis C through opening 11a of first hollow disc 11.

On one end of inner flow-path forming member 4, inner opening end 4a facing the inner surface of adsorption rotor 90 is provided. An aperture plane at inner opening end 4a is provided so as to face a part of the area of the inner surface of adsorption rotor 90. The other end of inner flow-path forming member 4 protrudes out of first flow-path forming member 2 from an opening 2a provided on first flow-path forming member 2.

At the edge of inner opening end 4a and downstream in the rotation direction of adsorption rotor 90, an inner curved face 4b is provided. At the edge of inner opening end 4a and upstream in the rotation direction of adsorption rotor 90, an inner curved face 4c is provided. Inner curved faces 4b and 4c are curved along the rotation direction of adsorption rotor 90.

On one end of outer flow-path forming member 5, an outer opening end 5a facing the outer periphery of adsorption rotor 90 is provided. Outer opening end 5a is provided so as to face a part of the area of the outer surface of adsorption rotor 90. The other end of outer flow-path forming member 5 protrudes out of treatment chamber 51.

At the edge of outer opening end 5a and downstream in the rotation direction of adsorption rotor 90, an outer curved face 5b is provided. At the edge of outer opening end 5a and upstream in the rotation direction of adsorption rotor 90, an outer curved face 5c is provided. Outer curved faces 5b and 5c are curved along the rotation direction.

As illustrated in Figs. 5 and 6, adsorption rotor 90 includes a desorption area R1 and an adsorption area R2 that are separated in the circumferential direction. Adsorption units 30 are alternately moved in desorption area R1 and adsorption area R2 by adsorption rotor 90 rotating about cylinder axis C.

As illustrated in Fig. 6, space portions S rotating in response to the rotation of adsorption rotor 90 communicate with inner flow-path forming member 4 and outer flow-path forming member 5 in desorption area R1. In response to the rotation of adsorption rotor 90, inner seal member 41 slides on inner curved faces 4b and 4c and outer seal member 42 slides on outer curved faces 5b and 5c, so that some of space portions S communicate with inner flow-path forming member 4 and outer flow-path forming member 5 with airtightness.

Specifically, space portions S located between partition 20 located between inner curved face 4b and outer curved face 5b and partition 20 located between inner curved face 4c and outer curved face 5c communicate with inner flow-path forming member 4 and outer flow-path forming member 5 with airtightness.

Adsorption area R2 does not communicate with inner flow-path forming member 4 and outer flow-path forming member 5 and constitutes a flow path different from that of desorption area R1.

As illustrated in Fig. 4, fluid is introduced into desorption area R1 and adsorption area R2. In adsorption area R2, fluid is introduced inward from the outside of adsorption rotor 90 in a radial direction. The fluid having passed through adsorption area R2 flows to the outside of adsorption rotor 90 from opening 1 1a of first hollow disc 11 through cylinder hole 90a of adsorption rotor 90. In desorption area R1, fluid having passed through opening 11a of one of paired hollow discs 10 and the inside of inner flow-path forming member 4 is introduced outward from the inside of adsorption rotor 90 in a radial direction.

Fluid introduced into adsorption area R2 is the first treated gas serving as fluid being treated. The first treated gas contains an organic solvent as a substance to be treated. In adsorption area R2, the fluid being treated is clarified.

As illustrated in Fig. 4, during clarification, the first treated gas supplied into treatment chamber 51 by a blower F3 is introduced into adsorption area R2 from the outer surface of adsorption rotor 90. The first treated gas that has been introduced into adsorption area R2 is clarified by causing adsorption units 30 in adsorption area R2 to adsorb an organic solvent when the first treated gas passes through adsorption rotor 90 from the outer surface to the inner surface along a radial direction.

Second treated gas serving as clarified fluid being treated is discharged as clean gas into cylinder hole 90a of adsorption rotor 90 from adsorption area R2. The clean gas passes through cylinder hole 90a and flows from opening 11a of first hollow disc 11. The clean gas having flown from opening 11a passes through first flow-path forming member 2 and is discharged into clean-gas discharge flow path L202 outside treatment chamber 51.

The second treated gas is partially introduced into desorption area R1 by a blower F4. In desorption area R1, substances being treated, e.g., an organic solvent adsorbed in adsorption units 30 are desorbed, so that adsorption units 30 are recycled and gas containing a concentrated organic solvent is generated.

In order to desorb an organic solvent, the second treated gas is partially introduced into desorption area R1 from inner flow-path forming member 4. When passing through adsorption rotor 90, part of the second treated gas that has been introduced into desorption area R1 thermally desorbs an organic solvent adsorbed in adsorption units 30 located in desorption area R1. The second treated gas that contains an organic solvent is partially discharged as concentrated gas from desorption area R1 to outer flow-path forming member 5 by using a blower F5. The concentrated gas is discharged out of treatment chamber 51 and is returned to a return flow path 400.

In adsorbent body 501, a substance being treated is adsorbed to adsorption units 30 located in adsorption area R2, and after the adsorption, a substance being treated is desorbed from adsorption units 30 located in desorption area R1. The rotation of adsorption rotor 90 about cylinder axis C causes adsorption units 30 to alternately move to desorption area R1 and adsorption area R2, so that adsorption and desorption of a substance being treated are consecutively performed.

In the foregoing embodiment, partitions 20 shaped like triangular poles are illustrated. The shape is not limited thereto and can be changed as necessary. For example, partitions 20 may be plate-like in shape if partitions 20 are so strong as to support the pair of hollow discs 10 and allow the mounting of seal members 40.

The foregoing embodiment described an example of adsorbent body 501 having an opening on one side, in which cylinder hole 90a of adsorption rotor 90 has an opening only on one side (the upper side in Fig. 4) in the axial direction (the extending direction of cylinder axis C) of adsorption rotor 90 and clean gas clarified by adsorption rotor 90 flows upward in Fig. 4 and passes through first flow-path forming member 2. The structure of adsorbent body 501 of the embodiment may have openings on both sides such that cylinder hole 90a is opened on both sides in the axial direction of adsorption rotor 90 and clean gas flows upward and downward in Fig. 4 from cylinder hole 90a.

### [Another Embodiment]

Organic solvent recovery device 100 may include four or more treatment tanks. In this case, a desorbing step is performed in one of the treatment tanks; meanwhile, an adsorbing step is performed in multiple stages in the other three treatment tanks connected in series via a connecting flow path.

A solvent treatment device disclosed in WO 2013/187274 may be used instead of organic solvent concentrating device 200.

It should be understood that the disclosed embodiments are merely exemplary and are not restrictive in all the aspects. The scope of the present disclosure is not indicated by the foregoing description but the claims. The scope of the present disclosure is intended to include meanings equivalent to the claims and all changes in the scope.

### REFERENCE SIGNS LIST

1: organic solvent recovery system; 100: organic solvent recovery device; 101: first treatment tank; 101A: first adsorbent; 102: second treatment tank; 102A: first adsorbent; 103: third treatment tank; 103A: first adsorbent; 110: water vapor supply unit; 120: separator; 130: waste water treatment equipment; 140: heater; 150: control unit; 152: temperature sensor; 200: organic solvent concentrating device; 201: adsorbent body; 201A: second adsorbent; 202: adsorbing unit; 203: desorbing unit; 300: feed flow path; 400: return flow path; 500: organic solvent concentrating device; 501: adsorbent body; L10: gas-being-treated supply flow path; L21, L22, L23: connecting flow path; L31, L32, L33: extraction flow path; L40: water-vapor supply flow path; L51, L52, L53: organic-solvent recovery flow path; L60: resupply flow path; L70: diluent-gas supply flow path; L80: connecting flow path; V11, V12, V13, V21, V22, V23, V31, V32, V33, V41, V42, V43, V70: on-off valve; V101, V102, V103, V201, V202, V203: open/close damper

## Claims

1. An organic solvent recovery system comprising:
an organic solvent recovery device that includes at least three treatment tanks, each containing a first adsorbent capable of adsorbing and desorbing an organic solvent contained in gas being treated, the treatment tanks alternately adsorbing the organic solvent to the first adsorbent and desorbing the organic solvent from the first adsorbent by using water vapor, a water vapor supply unit that introduces the water vapor into selected one of the treatment tanks, a connecting flow path connecting the other treatment tanks in series in multiple stages, an extraction flow path that discharges the gas being treated from the treatment tank disposed downstream among the treatment tanks connected in series in multiple stages after the gas is introduced from the treatment tank disposed upstream among the treatment tanks connected in series in multiple stages, the gas being discharged as first treated gas from which the organic solvent is adsorbed by the first adsorbent of the treatment tanks connected in series in multiple stages, and a diluent-gas supply flow path that supplies diluent gas to the connecting flow path;
an organic solvent concentrating device containing at least one second adsorbent capable of adsorbing and desorbing the organic solvent, the organic solvent concentrating device including an adsorbing unit that adsorbs, by using the at least one second adsorbent, the organic solvent contained in the first treated gas from the extraction flow path and discharges second treated gas, and a desorbing unit that desorbs, from the at least one second adsorbent, the organic solvent adsorbed in the at least one second adsorbent and discharges the organic solvent as concentrated gas; and
a return flow path that returns the concentrated gas to the diluent-gas supply flow path,
wherein the at least one second adsorbent contains activated carbon fiber nonwoven fabric.

2. The organic solvent recovery system according to claim 1, wherein the organic solvent concentrating device has the at least one second adsorbent disposed on a disc-like adsorption rotor that rotates about a cylinder axis.

3. The organic solvent recovery system according to claim 1, wherein the organic solvent concentrating device contains the at least one second adsorbent comprising a plurality of second adsorbents disposed in a circumferential direction around a cylinder axis of a rotor shaped like a hollow cylinder that rotates about the cylinder axis.

4. The organic solvent recovery system according to any one of claims 1 to 3, wherein the activated carbon fiber nonwoven fabric has a fiber diameter of 11 µm or more and 120 µm or less, a toluene adsorbency of 25 wt% or more and 75 wt% or less, and a total basis weight of 200 g/m² or more and 6000 g/m² or less.
